**Europäisches Patentamt**

**European Patent Office**

**Office européen des brevets**

(19)

(11) Veröffentlichungsnummer : **0 089 458**
**B1**

# (12) EUROPÄISCHE PATENTSCHRIFT

(45) Veröffentlichungstag der Patentschrift :
28.05.86

(51) Int. Cl.⁴ : **F 16 J 15/32**

(21) Anmeldenummer : **83100557.4**

(22) Anmeldetag : **22.01.83**

(54) **Radialwellendichtring.**

(30) Priorität : **18.03.82 DE 3209926**

(43) Veröffentlichungstag der Anmeldung :
**28.09.83 Patentblatt 83/39**

(45) Bekanntmachung des Hinweises auf die Patenterteilung : **28.05.86 Patentblatt 86/22**

(84) Benannte Vertragsstaaten :
**AT BE CH DE FR GB IT LI LU NL SE**

(56) Entgegenhaltungen :
**DE-A- 1 902 491**
**DE-U- 8 214 244**
**GB-A-   906 366**

(73) Patentinhaber : **Firma Carl Freudenberg**
**Höhnerweg 4**
**D-6940 Weinheim/Bergstrasse (DE)**

(72) Erfinder : **Hölzer, Helmut**
**Hegelstrasse 15**
**D-6940 Weinheim (DE)**

(74) Vertreter : **Weissenfeld-Richters, Helga, Dr.**
**Höhnerweg 2**
**D-6940 Weinheim/Bergstrasse (DE)**

**Beschreibung**

Die Erfindung betrifft einen Radialwellendichtring, bestehend aus einem Versteifungsring mit einem winkelförmigen Profil sowie aus einem den nach innen weisenden Schenkel mit einer U-förmigen Aussparung umschließenden Lippenring aus einem polymeren Werkstoff, der eine Dichtlippe aufweist, die unter einer elastischen Vorspannung auf der Oberfläche der abzudichtenden Welle aufliegt.

Ein Radialwellendichtring der vorstehend angegebenen Art ist aus GB-A 906 366 bekannt. Der Lippenring besteht aus einem elastomeren Werkstoff und ist unmittelbar an den nach innen weisenden Schenkel des Versteifungsringes anvulkanisiert. Unter Betriebsbedingungen nimmt der Lippenring insofern eine ruhende Position ein, und seine Dichtlippe liegt gleitend auf der Oberfläche der abgedichteten Welle auf. Sie ist außerordentlich verschleißempfindlich, und eine gute Gebrauchsdauer kann nur dann erwartet werden, wenn die Oberfläche der Welle frei von wesentlichen Unebenheiten ist. Die Welle bedarf infolgedessen der Feinbearbeitung und insofern bei ihrer Herstellung der Anwendung kostspieliger Verfahrensschritte.

DE-C 16 75 397 nimmt Bezug auf einen mit der Welle umlaufenden Lippenring, der mit einer in axialer Richtung wirksamen Dichtlippe an einer sich senkrecht zur Rotationsachse erstreckenden Kreisringfläche des Gehäuses anliegt. Ein gutes Abdichtungsergebnis kann in diesem Falle nur dann erzielt werden, wenn Lippenring und Gehäuse einander in einer hochpräzisen Weise zugeordnet sind, was insbesondere beim Auftreten von Schwingungen nur schwierig zu gewährleisten ist. Wellendichtringe der angegebenen Art haben aus diesem Grunde keine Verbreitung gefunden.

Der Erfindung liegt die Aufgabe zugrunde, einen Radialwellendichtring zu entwickeln, der unter Vermeidung einer aufwendigen Feinbearbeitung der abzudichtenden Welle und von aufwendigen Justierarbeiten als komplette Baueinheit montierbar ist und sich durch ein gutes Abdichtungsergebnis über eine verbesserte Zeitspanne auszeichnet.

Diese Aufgabe wird erfindungsgemäß bei einem Radialwellendichtring der eingangs genannten Art dadurch gelöst, daß der Schenkel und die die Aussparung einschließenden Vorsprünge ohne eine Vorspannung und ohne feste gegenseitige Verbindung einander berühren.

Der Lippenring der vorgeschlagenen Ausführung liegt somit unter einer elastischen Vorspannung auf der abgedichteten Welle auf, und wird infolgedessen von dieser bei einer Drehbewegung mitgenommen. Seine flächig an dem nach innen vorspringenden Schenkel des Versteifungsringes anliegenden Vorsprünge berühren diesen ohne besondere Anpreßkraft, und es treten infolgedessen nennenswerte Reibungskräfte in diesem Bereich nicht auf. Der Verschleiß im Bereich der eigentlichen Kontaktflächen ist dementsprechend außerordentlich gering, und es wird, verglichen mit üblichen Radialwellendichtringen der eingangs genannten Art, eine wesentlich verminderte Bremswirkung auf die sich drehende Welle ausgeübt.

Der vorgeschlagene Radialwellendichtring kann als komplette Einbaueinheit montiert werden, wobei sich selbsttätig eine exakte gegenseitige Zuordnung zwischen den relativ zueinander beweglichen Teilen ergibt. Eine besondere Justierung ist in keinem Falle erforderlich.

Die eigentliche Dichtlippe des Lippenringes liegt ruhend auf der Oberfläche der sich drehenden Welle auf, und unterliegt in diesem Bereich infolgedessen keinerlei Verschleiß. Die Oberfläche der Welle bedarf keiner hochgradig spezialisierten Feinbearbeitung.

Der Lippenring kann aus einem thermoplastischen Werkstoff bestehen, beispielsweise aus Polypropylen. Für den Bereich höherer Temperaturen hat sich die Verwendung von Polytetrafluoräthylen ausgezeichnet bewährt, während im allgemeinen Getriebe- und Motorenbau vor allem gummielastische Werkstoffe zur Anwendung kommen, die schon bei der Herstellung üblicher Radialwellendichtringe gebräuchlich sind. Kombinationen aus unterschiedlichen Werkstoffen in bezug auf die Erzielung bestimmter Eigenschaften sind ohne weiteres denkbar. Insbesondere hat es sich ausgezeichnet bewährt, die aufeinandergleitenden Flächen des Lippenringes und/oder des Vorsprunges des Versteifungsringes reibungsvermindernd auszurüsten, beispielsweise durch Ein- und/oder Aufbringung von Polytetrafluoräthylen in fein verteilter oder kompakt geschichteter Form.

Nach einer vorteilhaften Ausgestaltung ist es vorgesehen, daß der dem abzudichtenden Medium zugewandte Vorsprung einen größeren Außendurchmesser aufweist als der von dem abzudichtenden Medium abgewandte Vorsprung. Die die Abdichtwirkung maßgeblich beeinflussende Fliehkraft ist bei einer solchen Ausführung auf der Seite des abzudichtenden Mediums größer als auf der Außenseite, wodurch in den Dichtspalt eindringendes, überflüssiges Lecköl zurück in den abgedichteten Raum gefördert wird.

Der nach innen weisende Schenkel des Versteifungsringes kann im Bereich der Vorsprünge in Richtung des abzudichtenden Mediums vorgeneigt oder vorgewölbt sein. Seine Gestalt läßt sich in diesem Bereich insofern als kegelförmig bzw. als trompetenartig vorgezogen beschreiben. Beide Oberflächen verlaufen in allen Fällen parallel zueinander. Der Lippenring ist in allen Fällen so ausgebildet und angepaßt, daß eine nennenswerte Reibung im Bereich der aufeinandergleitenden Flächen auch nach dem Einbau sicher vermieden wird.

Bei einer Ausführung der vorstehend angegebenen Art hat es sich als vorteilhaft bewährt, wenn die abzudichtende Welle und der Schenkel im Bereich der Vorsprünge einen Winkel von 25 bis 60° einschließen. Der bevorzugte Bereich beträgt 35 bis 45°. Sowohl radiale als auch axiale Wellenbewegungen während des Laufens der Welle lassen sich durch eine solche Ausführung ausgezeichnet beherrschen.

Die zur statischen Abdichtung an der Wellenoberfläche benötigte Anpreßkraft der Dichtlippe kann, in Abhängigkeit vom verwendeten Werkstoff, durch eine einfache mäßliche Abstimmung mit dem Wellendurchmesser erzeugt werden. Bei stark relaxierenden Werkstoffen, wie beispielsweise bei Polytetrafluoräthylen oder bei thermoplastischen Werkstoffen empfiehlt sich die Anwendung sekundärer Anpreßmittel, wie beispielsweise einer Ringwendelfeder gemäß GB-PS 906 366.

Der vorgeschlagene Radialwellendichtring kann als Vorschaltdichtung verwendet werden, beispielsweise um einen Radialwellendichtring üblicher Bauart vor einer Beaufschlagung von außen mit grobem Schmutz, Staub oder Sand zu schützen. Der vorgeschlagene Radialwellendichtring kann auch in tandemartiger Zusammenfassung mehrfach hintereinander angeordnet werden, wobei eine Sperrflüssigkeit in den Zwischenräumen mit abgestaffeltem Druck die Abdichtung hoher Drücke ermöglicht.

In der in der Anlage beigefügten Zeichnung sind einige beispielhafte Ausführungen des vorgeschlagenen Radialwellendichtringes dargestellt. Sie werden nachfolgend näher erläutert:
- Figur 1 zeigt einen Radialwellendichtring mit einem Versteifungsring 1, der einen senkrecht zur abzudichtenden Welle 4 hin abgewinkelten, umlaufenden Vorsprung 6 aufweist.

Figur 2 zeigt eine Ausführung, bei der der nach innen weisende Vorsprung des Profils des Versteifungsringes 1 und die abgedichtete Welle 4 einen Winkel von 45° einschließen.

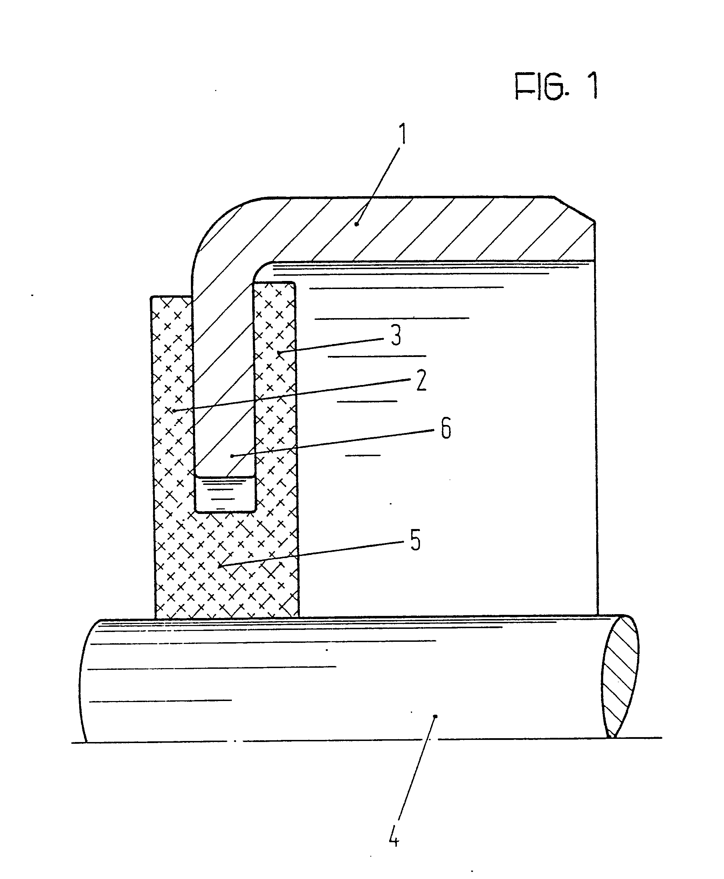

Der Versteifungsring 1 des Radialwellendichtringes gemäß Figur 1 besteht aus Stahlblech mit einer Dicke von 0,8 mm. Der Versteifungsring ist tassenförmig ausgebildet, und er hat ein nach innen abgewinkeltes Profil, das der abgedichteten Welle unter einem rechten Winkel zugeordnet ist. Auf den so gebildeten Schenkel 6 ist der im Profil U-förmig gestaltete Lippenring 5 aufgeschoben. Die Dimensionierung und gegenseitige Abstimmung der Abmessungen ist dabei so vorgenommen, daß die beiden Vorsprünge 2, 3 des Lippenringes ohne nennenswerte Anpressung an den beiderseitigen Stirnflächen des Schenkels 6 anliegen. In radialer Richtung ist beiderseits ein Abstand vorhanden, so daß der Lippenring ohne nennenswerte Schwierigkeiten in radialer Richtung bewegt werden kann.

Der Innendurchmesser des Lippenringes 5 ist so mit dem Außendurchmesser der abgedichteten Welle abgestimmt, daß sich ohne Verwendung sekundärer Abstützelemente, wie beispielsweise einer Ringwendelfeder, eine zuverlässige, statisch dichte Abdichtung des Spaltes zwischen beiden Teilen einstellt. Der Lippenring besteht aus einem gummielastischen Werkstoff mit einer Härte Shore A 88. Nach einer nicht dargestellten Variante ist es vorgesehen, die Anpressung der Dichtlippe gegen die abgedichtete Welle durch eine in die Nut eingelegte Ringwendelfeder zu erhöhen. Die Ringwendelfeder ist in diesem Falle so dimensioniert, daß sie keinerlei Einfluß auf die Reibungsverhältnisse zwischen dem Schenkel 6 und den beiderseits daran anliegenden Vorsprunge 2, 3 ausübt.

Der Außendurchmesser des dem abgedichteten Medium zugewandten Vorsprunges 3 ist geringfügig größer als derjenige des auf der Außenseite angeordneten Vorsprunges 2. Abzudichtendes Medium wird hierdurch sicher im abzudichtenden Raum gehalten.

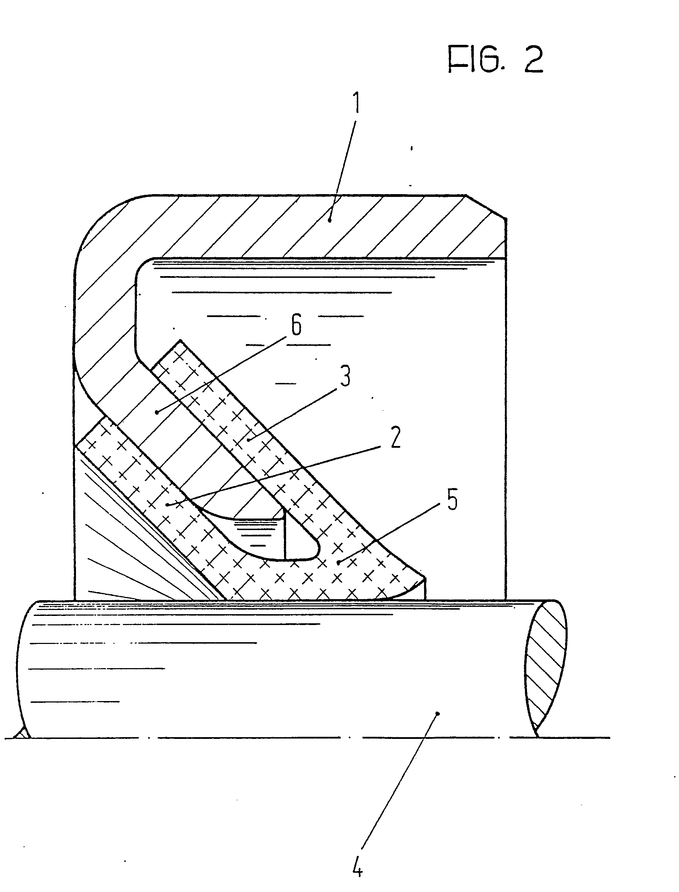

Bei der Ausführung nach Figur 2 ist der nach innen weisende Schenkel 6 des Versteifungsringes kegelig in Richtung des abgedichteten Mediums vorgeneigt. Er schließt mit der Rotationsachse der Welle 4 einen Winkel von 45° ein.

Auf dem Schenkel ist der relativ bewegliche Lippenring 5 gelagert. Er besteht aus Polytetrafluoräthylen und liegt infolge einer entsprechenden Dimensionierung ohne Verwendung sekundärer Andrückmittel mit einer zur Erzielung einer guten statischen Abdichtung ausreichenden Anpressung auf der Oberfläche der abgedichteten Welle 4 auf.

Die sich parallel zur Oberfläche des Schenkels erstreckenden Kontaktflächen der Vorsprünge 2 und 3 liegen ohne nennenswerte Anpressung an dem Schenkel an. Der Vorsprung 3 hat deutlich sichtbar einen wesentlich größeren Außendurchmesser als der Vorsprung 2, wodurch eine Leckage im Bereich der aufeinandergleitenden Flächen sicher vermieden wird. Der Vorsprung 2 steht in axialer Richtung nicht über dem Versteifungsring 1 vor, was im bezug auf eine rationelle und kostengünstige Montage von großem Vorteil ist. Eine nachträgliche Justierung der relativ zueinander beweglichen Teile 1 und 5 nach dem Einbau ist nicht erforderlich.

**Patentansprüche**

1. Radialwellendichtring, bestehend aus einem Versteifungsring (1) mit winkelförmigem Profil sowie aus einem den nach innen weisenden Schenkel (6) mit einer U-förmigen Aussparung umschließenden Lippenring (5) aus einem polymeren Werkstoff, der eine Dichtlippe aufweist, die unter einer Vorspannung auf der abzudichtenden Welle (4) aufliegt, dadurch gekennzeichnet, daß der Schenkel (6) und die die Aussparung einschließenden Vorsprünge (2, 3) des Lippenrings (5) ohne Vorspannung und ohne feste Verbindung einander berühren und der Lippenring mit der Welle umläuft.

2. Radialwellendichtring nach Anspruch 1, dadurch gekennzeichnet, daß der dem abzudichtenden Medium zugewandte Vorsprung (3) einen größeren Außendurchmesser aufweist als der dem abzudichtenden Medium abgewandte Vorsprung (2).

3. Radialwellendichtring nach Anspruch 1 bis 2, dadurch gekennzeichnet, daß der Schenkel im Bereich der Vorsprünge (2, 3) in Richtung des abzudichtenden Mediums vorgeneigt oder vorgewölbt ist.

4. Radialwellendichtring nach Anspruch 3, dadurch gekennzeichnet, daß die abzudichtende Welle (4) und der Schenkel (6) im Bereich der Vorsprünge (2, 3) einen Winkel von 25 bis 60° einschließen.

5. Radialwellendichtring nach Anspruch 1 bis 4, dadurch gekennzeichnet, daß die dem Schenkel (6) zugewandte Oberfläche der Vorsprünge reibungsvermindernd ausgerüstet ist.

6. Radialwellendichtring nach Anspruch 1 bis 5, dadurch gekennzeichnet, daß die den Vorsprüngen (2, 3) zugewandten Oberflächen des Schenkels (6) reibungsvermindernd ausgerüstet sind.

**Claims**

1. A radial shaft sealing ring, comprising a reinforcing ring (1) having an angular section and a lip ring (5) which encloses the inwardly directed leg (6) with a U-shaped recess, is made of a polymeric material and has a sealing lip which sits under prestress on the shaft (7) to be sealed, characterised in that the leg (6) and the lip ring projections (2, 3) enclosing the recess are in contact with one another without prestress and without fixed connection, and the lip ring rotates with the shaft.

2. A radial shaft sealing ring according to claim 1, characterised in that the projection (3) facing towards the medium to be sealed has a larger outside diameter than the projection (2) facing away from the medium to be sealed.

3. A radial shaft sealing ring according to claim 1 or 2, characterised in that, in the area of the projections (2, 3), the leg is inclined forward or curved forward in the direction of the medium to be sealed.

4. A radial shaft sealing ring according to claim 3, characterised in that the shaft (4) to be sealed and the leg (6) enclose an angle of 25 to 60° in the area of the projections (2, 3).

5. A radial shaft sealing ring according to any of claims 1 to 4, characterised in that there is a friction-reducing finish on that surface of the projections which faces towards the leg (6).

6. A radial shaft sealing ring according to any of claims 1 to 5, characterised in that there is a friction-reducing finish on those surfaces of the leg (6) which face towards the projections (2, 3).

**Revendications**

1. Bague radiale d'étanchéité pour arbre, constituée d'une bague raidisseuse (1) avec un profil angulaire, ainsi qu'une branche (6), tournée vers l'intérieur, avec une bague à lèvre (5) entourant une cavité en forme de « U » et réalisée en matériau polymère, qui présente une lèvre d'étanchéité qui appuie sur l'arbre (4) à rendre étanche avec précontrainte, caractérisée en ce que la branche (6) et les saillies (2, 3) entourant la cavité de la bague à lèvre sont au contact les unes avec les autres, sans précontrainte et sans liaison fixe, et en ce que la bague à lèvre tourne avec l'arbre.

2. Bague radiale d'étanchéité pour arbre, selon la revendication 1, caractérisée en ce que la saillie (3) tournée vers le fluide à contenir de manière étanche, présente un diamètre extérieur plus grand que celui de la saillie (2) écartée du fluide à contenir.

3. Bague radiale d'étanchéité pour arbre, selon les revendications 1 et 2, caractérisée en ce que la branche est inclinée ou cintrée d'avance dans la zone des saillies (2, 3) en direction du fluide à contenir de manière étanche.

4. Bague radiale d'étanchéité pour arbre, selon la revendication 3, caractérisée en ce que l'arbre (4) à rendre étanche et la branche (6) forment un angle de 25 à 60° dans la zone des saillies (2, 3).

5. Bague radiale d'étanchéité pour arbre, selon les revendications 1 à 4, caractérisée en ce que la surface des saillies tournée vers la branche (6) est traitée de manière à diminuer les frottements.

6. Bague radiale d'étanchéité pour arbre, selon les revendications 1 à 5, caractérisée en ce que les surfaces de la branche (6) tournées vers les saillies (2, 3) sont traitées de manière à diminuer les frottements.

FIG. 1

FIG. 2